# FASCICULE DE BREVET EUROPEEN

(11) **EP 4 569 234 B1**
(45) Date de publication et mention de la délivrance du brevet: **25.03.2026**
(21) Numéro de dépôt: 23758697.9
(22) Date de dépôt: 02.08.2023
(51) Int. Cl.: F04D 29/56, F01D 17/16, F04D 29/32, F01D 5/30, F01D 7/02, F04D 29/64, B64C 11/06

(54) **ENSEMBLE COMPORTANT UN ANNEAU ET UN MANCHON DE SUPPORT PIVOTANT DE PIED D'AUBES A CALAGE VARIABLE, TURBOMACHINE EQUIPEE D'UN TEL ENSEMBLE ET PROCEDE DE DEMONTAGE D'UN TEL ENSEMBLE**
ANORDNUNG MIT EINEM RING UND EINER SCHWENKBAREN STÜTZHÜLSE FÜR SCHAUFELFÜSSE MIT VARIABLER NEIGUNG, TURBINENMOTOR MIT SOLCH EINER ANORDNUNG UND VERFAHREN ZUR DEMONTAGE SOLCH EINER ANORDNUNG
ASSEMBLY COMPRISING A RING AND A PIVOTING SUPPORT SLEEVE FOR VARIABLE PITCH BLADE ROOTS, TURBINE ENGINE PROVIDED WITH SUCH AN ASSEMBLY AND METHOD FOR DISMANTLING SUCH AN ASSEMBLY

(30) Priorité: 11.08.2022 FR 2208246
(43) Date de publication de la demande: 18.06.2025
(73) Titulaire: SAFRAN AIRCRAFT ENGINES, 75015 Paris (FR)
(72) Inventeur: MILLIER, Vincent François Georges, 77550 MOISSY-CRAMAYEL (FR); BELMONTE, Olivier, 77550 MOISSY-CRAMAYEL (FR); CROCHEMORE, Yves Roland, 77550 MOISSY-CRAMAYEL (FR); ESCURE, Didier René André, 77550 MOISSY-CRAMAYEL (FR)
(74) Mandataire: Gevers & Orès
(86) Numéro de dépôt international: PCT/FR2023/051231
(87) Numéro de publication internationale: WO 2024/033587

(56) Documents cités:
- JP-A- 2016 098 815
- US-A- 4 047 840
- US-A1- 2016 146 025
- US-B2- 8 075 270

## Description

### Domaine de l'invention

La présente invention concerne le domaine général de l'aéronautique. Elle vise en particulier l'intégration d'aubes à calage variable dans un anneau qui équipe des turbomachines d'aéronef. Elle concerne également la turbomachine correspondante et le procédé de démontage correspondant.

### Arrière-plan technique

Les aubes à calage variable peuvent équiper des hélices non carénées de turbopropulseurs ou des soufflantes carénées de turboréacteurs. La variation du calage des aubes autour de leurs axes permet d'améliorer les performances de la turbomachine tout en limitant la masse de l'ensemble propulsif. Les aubes à calage variables permettent de modifier l'écoulement du flux traversant celles-ci selon les conditions de fonctionnement de la turbomachine et les phases de vol de l'aéronef que ce soit pour freiner l'aéronef (inversion de poussée) et/ou restaurer une marge de pompage sur des turbomachines à très fort taux de dilution. Des exemples d'aubes à calage variable sont décrites dans les documents US-A-4047840, US-B2-8075270, et US-A1-2016146025.

Les aubes à calage variable sont retenues dans un moyeu rotatif de manière générale à l'aide d'une liaison pivot. La liaison pivot est réalisée au moyen d'un plot de l'aube à calage variable qui est reçu dans un logement du moyeu. Ce genre de liaison permet en effet de tenir compte du rapport entre le moment aérodynamique au niveau du plot et de l'effort centrifuge qui peut être est insuffisant pour assurer un bon placage du plot sur le moyeu.

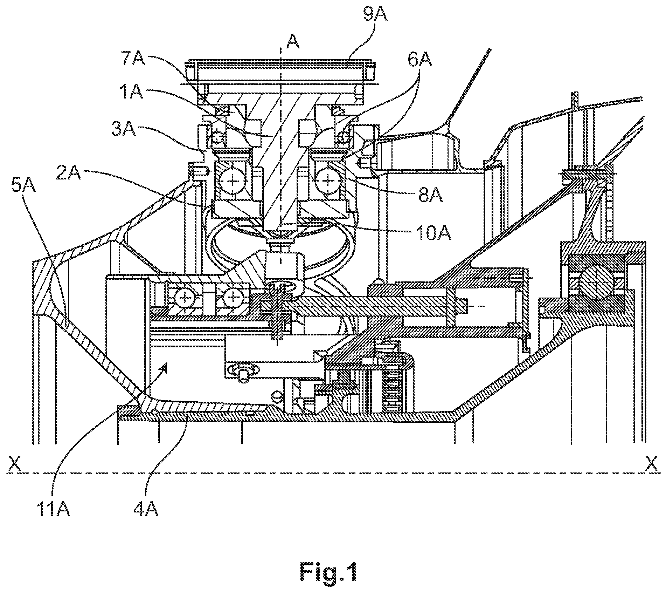

Un exemple de plot pour une aube à calage variable est représenté sur la figure 1. Le plot 1A de forme cylindrique est monté en rotation dans un logement 2A d'un anneau 3A autour d'un axe de calage A. L'anneau 3A est fixé à un arbre de rotor 4A via un tourillon 5A et est centré sur l'axe longitudinal X de la turbomachine. La rotation du plot 1A est permise grâce à deux paliers à roulement 6A à billes qui sont superposés suivant l'axe de calage A. Les paliers 6A comprennent chacun une bague interne 7A solidaire du plot 1A et une bague externe 8A solidaire de l'anneau 3A. L'extrémité radialement externe 9A du plot est destinée à être reliée à une extrémité interne d'une pale s'étendant radialement vers l'extérieur et l'extrémité radialement interne 10A du plot est reliée à un système de changement de pas 11A. Toutefois, une telle configuration implique des difficultés de démontage du plot de l'aube à calage variable suite à une avarie. En effet, les bagues externes des paliers étant fixées à l'anneau c'est tout le module complet avec l'anneau et les aubes qu'il faut retirer pour réaliser la maintenance. Le démontage de l'ensemble est davantage nécessaire lorsque les aubes sont entourées par un carter externe. Cela allonge la durée d'intervention et une perte économique.

### Résumé de l'invention

L'objectif de la présente invention est de fournir une solution permettant de faciliter le montage et le démontage des aubes à calage variable ayant un pied de forme cylindrique, notamment en cas dommages tout en évitant d'impacter la masse du module comprenant les aubes.

Nous parvenons à cet objectif conformément à l'invention grâce à un ensemble pour une turbomachine, en particulier d'aéronef, l'ensemble comportant un anneau d'axe de révolution, l'ensemble comprenant une pluralité de manchons de support présentant chacun un axe de révolution et destinés chacun à recevoir un plot d'une aube à calage variable, chaque manchon de support comprenant un alésage traversant de part et d'autre le manchon de support suivant l'axe de révolution, chaque manchon de support étant monté pivotant sur l'anneau suivant un axe de pivotement transversal à l'axe radial et à l'axe de révolution.

Ainsi, cette solution permet d'atteindre l'objectif susmentionné. En particulier, une telle configuration permet de retirer chaque aube à calage variable de manière individuelle si celle-ci est endommagée et/ou doit être contrôlée. Il n'est donc plus nécessaire de démonter l'ensemble du moyeu avec les pluralités d'aubes à calage variable. Par ailleurs, cela permet un gain de temps au niveau de l'intervention qui évite une immobilisation de la turbomachine au sol par exemple et ainsi un gain économique. A cela s'ajoute le fait que la réparation des aubes à calage variable de manière individuelle s'inscrit dans la réduction de l'impact environnemental puisque cela évite la destruction de tout un ensemble.

L'ensemble comprend également l'une ou plusieurs des caractéristiques suivantes, prises seules ou en combinaison :
- chaque manchon de support pivote entre une première position dans laquelle l'axe de révolution du manchon de support est parallèle à l'axe radial et perpendiculaire à l'axe de révolution, et une deuxième position dans laquelle l'axe de révolution du manchon de support est transversal à l'axe radial.
- l'anneau est muni d'une pluralité d'orifices traversant une paroi annulaire de l'anneau suivant un axe radial et disposés régulièrement autour de l'axe de révolution et en ce que l'anneau comprend deux oreilles qui s'étendent en saillie de part et d'autre de chaque orifice, chaque manchon de support étant installé entre les deux oreilles et pivotant sur les oreilles suivant l'axe de pivotement.
- l'anneau s'étend entre une extrémité amont et une extrémité aval suivant l'axe de révolution de l'anneau, l'anneau comprenant deux oreilles qui s'étendent en saillie au voisinage de l'extrémité amont, chaque manchon de support pivotant sur les oreilles suivant l'axe de pivotement.
- l'anneau comprend des moyens de renfort mécanique, les moyens de renfort mécanique comportant des nervures qui s'étendent d'une part, entre une extrémité amont et une extrémité aval de l'anneau suivant un axe de révolution, et d'autre part suivant l'axe radial, les nervures étant disposées de part et d'autre des orifices autour de l'axe de révolution.
- l'ensemble comprend une pluralité d'aubes à calage variable munies chacune d'un plot de forme cylindrique, chaque plot étant monté pivotant dans l'alésage d'un manchon de support autour d'un axe de calage.
- chaque aube à calage variable comprend une pale qui s'étend depuis le plot, la pale et le plot étant formés d'une seule pièce.
- chaque plot comprend une attache à une extrémité radialement extérieure, l'attache étant destinée à recevoir un pied d'aube et comportant une rainure qui s'étend suivant un axe perpendiculaire à l'axe du plot.
- l'ensemble comprend des moyens de fixation qui sont configurés de manière à retenir le manchon de support sur l'anneau lorsque celui-ci est dans la première position.
- l'anneau est muni d'une pluralité d'orifices traversant une paroi annulaire de l'anneau suivant un axe radial et disposés régulièrement autour de l'axe de révolution.
- le plot de chaque aube est destiné à traverser un orifice.
- chaque manchon de support est en regard d'un orifice dans la première position.
- chaque manchon de support traverse au moins en partie un orifice dans la deuxième position.
- chaque manchon de support est à l'extérieur et à distance d'un orifice dans la deuxième position.
- l'ensemble comprend au moins deux paliers à roulement comprenant chacun une bague interne montée sur une paroi externe du plot et une bague externe destinée à être en appui contre une paroi interne cylindrique de l'alésage du manchon de support, les bagues interne et externe définissant des pistes de roulement pour des organes roulants.

L'invention concerne également une turbomachine comprenant un tel ensemble, un système de changement de pas relié à une extrémité radialement intérieure d'un plot de chaque aube à calage variable et un arbre de rotor relié à l'anneau.

L'invention concerne en outre un aéronef comprenant une turbomachine telle que susmentionnée.

Enfin, l'invention concerne un procédé de démontage d'un ensemble tel que susmentionné, le procédé comprenant les étapes suivantes :
- retrait des moyens de fixation du manchon de support sur l'anneau,
- pivotement du manchon de support suivant l'axe de pivotement et vers l'amont suivant l'axe de révolution, et
- extraction du plot du manchon de support ou du manchon de support de l'anneau.

Selon le procédé, celui-ci comprend, préalablement à l'étape d'extraction du plot, une étape de désengagement du manchon de support par rapport à l'anneau au niveau de l'axe de pivotement.

Suivant une autre caractéristique du procédé, celui-ci comprend une étape de basculement du manchon de support par rapport à l'anneau après l'étape de désengagement.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
La figure 1 est une vue en coupe axiale d'un exemple de pied de forme cylindrique selon l'art antérieur ;
La figure 2 est une vue en perspective d'un moyeu d'aubes à calage variable qui sont carénées par un carter externe selon l'invention ;
La figure 3 est une vue en perspective d'un anneau destiné à porter une pluralité d'aubes à calage variable selon l'invention ;
La figure 4 est une vue de détail d'un exemple d'anneau destiné à porter des aubes à calage variable selon l'invention ;
La figure 5 représente un mode de réalisation d'un anneau et d'un manchon de support d'une aube à calage variable selon l'invention ;
La figure 6 est une vue en coupe radiale de l'anneau et du manchon de support de la figure 4 selon l'invention ;
La figure 7 représente un autre mode de réalisation d'un anneau et d'un manchon de support d'aubes à calage variable selon l'invention ;
La figure 8 est une vue de détail et en perspective d'un manchon de support destiné à porter une aube à calage variable et situé dans une première position selon l'invention ;
La figure 9 est une vue de détail et en perspective d'un manchon de support destiné à porter une aube à calage variable et situé dans une deuxième position selon l'invention
La figure 10 illustre un autre mode de réalisation d'une aube et du manchon de support selon l'invention ;
La figure 11 représente une étape de désengagement d'un manchon de support d'un procédé de démontage selon l'invention ;
La figure 12 représente une étape de basculement d'un manchon de support d'un procédé de démontage selon l'invention ;
La figure 13 représente une étape de basculement d'un procédé de démontage selon l'invention ; et
La figure 14 représente une étape d'extraction et de séparation d'un manchon de support monté sur une aube d'un procédé de démontage selon l'invention.

### Description détaillée de l'invention

La figure 1 représente un plot de forme cylindrique pour une aube à calage variable qui est installé dans un anneau rotatif d'une turbomachine et qui a déjà été décrit précédemment. La figure 1 illustre la technique antérieure à la présente invention.

L'invention s'applique aux aubes à calage variable dont la variation ou le pivotement est piloté par un système de changement de pas 40 et à toutes turbomachines équipées de ces aubes à calage variable.

La turbomachine peut être un turbopropulseur comprenant une pluralité d'aubes à calage variable non carénées et connue sous l'expression anglaise de « open rotor » ou un turboréacteur comprenant une pluralité d'aubes à calage variable carénées et connue sous l'expression de turbosoufflante. La turbomachine est destinée à être montée sur un aéronef. Bien entendu, les aubes à calage variable peuvent équiper d'autres machines telles que des éoliennes.

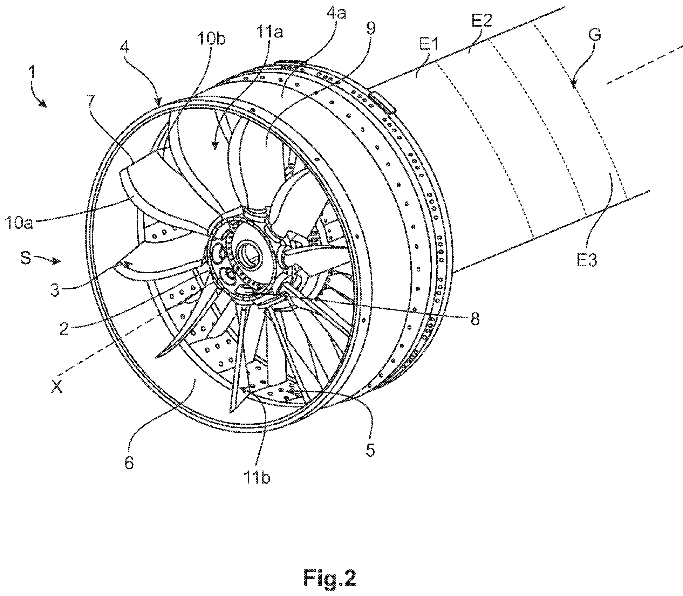

La figure 2 illustre une turbomachine 1 destinée à équiper un aéronef. La turbomachine comprend de manière générale, d'amont en aval suivant la circulation des gaz et suivant un axe longitudinal X, un ensemble de compresseurs E1, une chambre annulaire de combustion E2 et un ensemble de turbines E3. Ces ensembles forment un générateur de gaz G. Les ensembles de compresseurs et de turbines comprennent respectivement au moins un étage de compresseur et au moins un étage de turbine. Dans le cadre d'un turboréacteur, celui-ci comprend une soufflante S comportant les aubes à calage variable et qui est placée en amont de l'ensemble de compresseurs E1. Dans le cadre d'un turbopropulseur, une ou plusieurs hélices contrarotatives comprenant les aubes à calage variable, sont placées soit en amont de l'ensemble de compresseurs (configuration de « puller » en anglais) soit en aval de l'ensemble de turbines (configuration de « pusher » en anglais).

Sur la figure 2, un module de turbomachine 1, centré sur l'axe longitudinal X, comprend un anneau 2 qui porte une pluralité d'aubes 3 à calage variable. Ce module se trouve en amont du générateur de gaz G dont un rotor entraîne la pluralité d'aubes à calage variable autour de l'axe longitudinal X. Les aubes 3 à calage variable peuvent présenter une inclinaison par rapport à un axe de calage A de l'aube 3 et qui varie selon les régimes atteints de manière à améliorer les performances aérodynamiques et le rendement de la turbomachine qui en est équipée.

De manière avantageuse, mais non limitativement, le module de turbomachine 1 comprend un carter externe 4 centré sur l'axe longitudinal X et entourant les aubes 3 à calage variable. Le carter externe 4 comprend une paroi cylindrique 4a ayant une surface interne 5 sur laquelle est disposé un revêtement 6 annulaire abradable. Ce dernier est disposé en regard des extrémités libres 7 des aubes 3 et à faible distance de celles-ci. Cette faible distance implique que le revêtement 6 abradable peut être usé par le frottement des aubes 3 pendant la rotation de celles-ci et limiter les fuites de gaz aux extrémités libres 7.

Chaque aube 3 à calage variable comprend un plot 8 et une pale 9 qui s'étend suivant un axe radial Z vers l'extérieur depuis le plot 8. L'axe radial Z est perpendiculaire à l'axe longitudinal X. Chaque pale 9 comprend un bord d'attaque 10a et un bord de fuite 10b qui sont reliées par des surfaces intrados et extrados 11a, 11b.

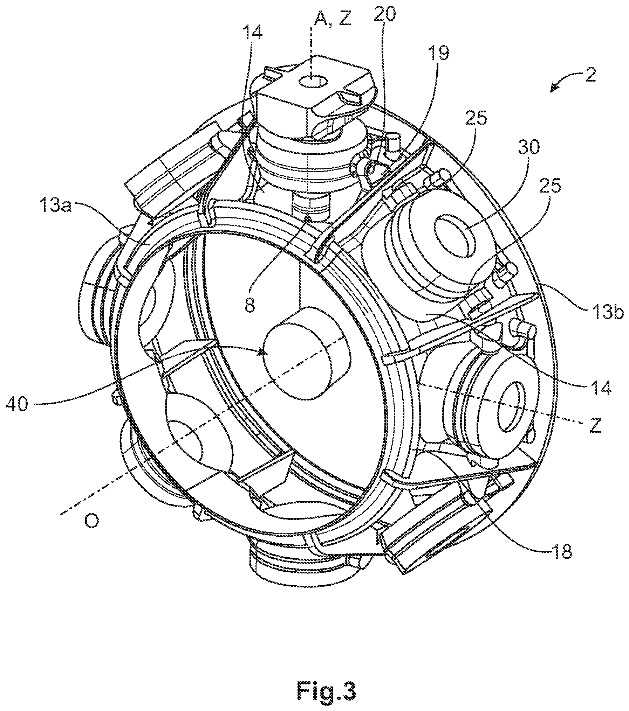

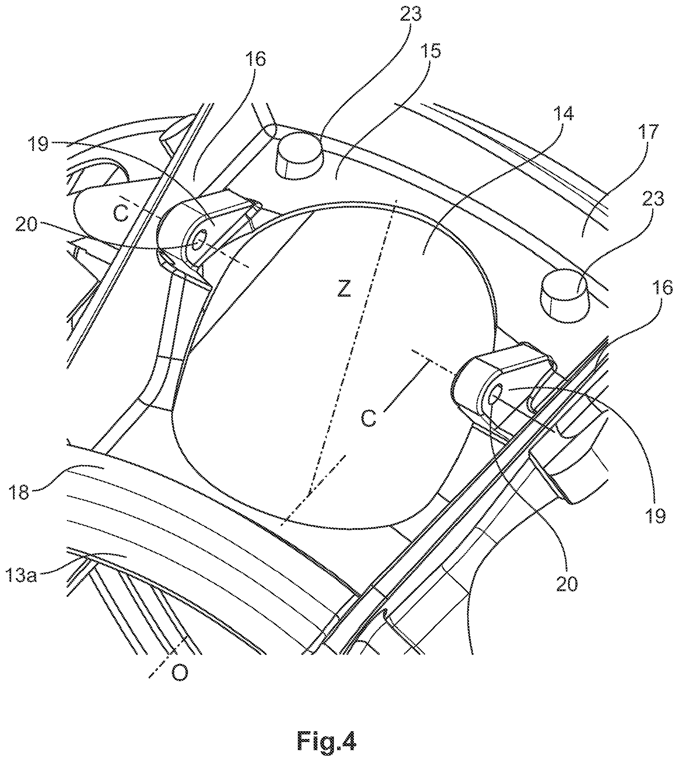

En référence aux figures 3 et 4, le plot 8 de chaque à aube à calage variable est porté par l'anneau 2 via un manchon de support 12. Le manchon de support 12 est amovible et également monté mobile suivant un axe de pivotement par rapport à l'anneau 2. En particulier, chaque plot 8 est monté pivotant dans un manchon de support 12 correspondant autour de son axe de calage A et le pivotement de chaque manchon de support 12 facilite d'une part, l'accessibilité de l'aube 3 à calage variable et d'autre part, son extraction de l'anneau 2.

L'anneau 2 présente un présente un axe de révolution O qui est centré sur l'axe longitudinal X de la turbomachine en situation d'installation. L'anneau dans le mode de réalisation de la figure 3 présente une paroi annulaire 15 de forme générale tronconique. De manière alternative, la paroi annulaire 15 de l'anneau 2 présente une forme cylindrique à section circulaire droit.

De manière avantageuse, l'anneau 2 est monté mobile en rotation autour de l'axe longitudinal X. A cet effet, l'anneau 2 s'étend suivant son axe de révolution entre une extrémité amont 13a et une extrémité aval 13b. L'extrémité amont 13a est fixée à un tourillon (non représenté) qui est lui-même fixé à un arbre de rotor (non représenté).

Avantageusement, le petit diamètre de la paroi 15 tronconique est situé vers l'extrémité amont 13a et le grand diamètre de la paroi 15 tronconique est situé vers l'extrémité aval 13b. Ceci permet une meilleure intégration de l'anneau 2 dans la turbomachine. L'anneau 2 comprend une pluralité d'orifices 14 qui traversent la paroi annulaire 15 de l'anneau 2 de part et d'autre suivant l'axe radial. Les orifices 14 sont répartis régulièrement autour de l'axe longitudinal X.

De manière avantageuse, mais non limitativement, chaque orifice 14 présente une forme générale rectangulaire avec des portions arrondies ou circulaires. Plus précisément, chaque orifice 14 présente quatre portions avec de grands rayons qui sont reliées à quatre portions de petits rayons (les grands rayons étant supérieurs aux petits rayons).

L'anneau 2 est équipé de moyens de renfort mécanique configurés de manière à améliorer la résistance mécanique de celui-ci. Les moyens de renfort mécanique comprennent plusieurs nervures 16 qui s'étendent d'une part, suivant l'axe radial Z et d'autre part, suivant l'axe longitudinal. Suivant l'exemple représenté sur la figure 4, chaque nervure 16 s'étend entre une bride annulaire 17 et l'extrémité amont 13a. La bride annulaire 17 permet également de renforcer mécaniquement l'anneau 2. De manière alternative, les nervures 16 s'étendent également vers l'intérieur de la paroi annulaire. Dans ce cas, un anneau intérieur serait monté à l'intérieur de l'anneau 2, la portion des nervures internes relie les parois des anneaux.

De manière avantageuse, mais non limitativement, la bride annulaire 17 est centrée sur l'axe de révolution O et s'étend suivant l'axe radial. La bride annulaire 17 est également disposée en amont de l'extrémité aval 13b de l'anneau 2.

Toujours en référence à la figure 4, nous voyons que l'anneau 2 comprend une structure de renforcement 18 qui est annulaire et centrée sur l'axe longitudinal X. Cette structure de renforcement 18 comprend une forme de section radiale en U dont les deux branches sont reliées à la paroi 15 de l'anneau 2. L'ouverture de la section en U est orientée vers l'intérieure de l'anneau 2. Cette structure de renforcement fait partie des moyens de renfort mécanique de l'anneau 2.

De la sorte, chaque orifice 14 est entouré par des nervures 16 qui sont en regard l'une de l'autre suivant une direction circonférentielle autour de l'axe longitudinal, de la bride annulaire 17 et de la structure de renforcement 18. Les brides, nervures et structure de renforcement forment un caisson de renforcement de la paroi de l'anneau 2. Les nervures 16 sont disposées de manière axisymétrique (ou régulièrement autour de l'axe de la turbomachine) de façon à conserver une raideur suffisante lors du fonctionnement de la turbomachine. Les efforts tangentiels traversent les nervures 16 pendant le pivotement des aubes 3 à calage variable autour leur axe de calage A.

En référence aux figures 3, 5 et 6, chaque manchon de support 12 est destiné à recevoir le plot 8 d'une aube à calage variable. Chaque manchon de support 12 comprend un corps cylindrique 21 ayant un axe de révolution D. L'axe de révolution est coaxial avec l'axe de calage A de chaque aube 3 à calage variable en situation d'installation. Chaque manchon de support 12 est monté pivotant sur l'anneau 2 autour d'un axe de pivotement C entre une première position dans laquelle l'axe de révolution D du manchon de support est parallèle à l'axe radial Z et une deuxième position dans laquelle l'axe de révolution D du manchon de support 12 est transversal à l'axe radial Z.

Dans le présent exemple de réalisation, l'axe de pivotement C est transversal à l'axe de révolution D. L'axe de pivotement C est avantageusement transversal aussi à l'axe de calage A de chaque aube 3 à calage variable. A cet effet, l'anneau 2 comprend deux oreilles 19 qui sont disposées en regard l'une de l'autre suivant la direction circonférentielle. Les oreilles 19 s'étendent en saillie sensiblement (plus ou moins 10° d'inclinaison) suivant l'axe radial. En particulier, les oreilles 19 sont situées respectivement de part et d'autre de chaque orifice 14 de l'anneau 2 suivant la direction circonférentielle. Chaque oreille 19 comprend un alésage 20 traversant sa paroi de part et d'autre suivant un axe transversal à l'axe radial Z. Les alésages 20 des oreilles définissent l'axe de pivotement C du manchon de support 12. Dans le présent exemple, les oreilles 19 sont réalisées d'un seul tenant avec la paroi 15 de l'anneau 2.

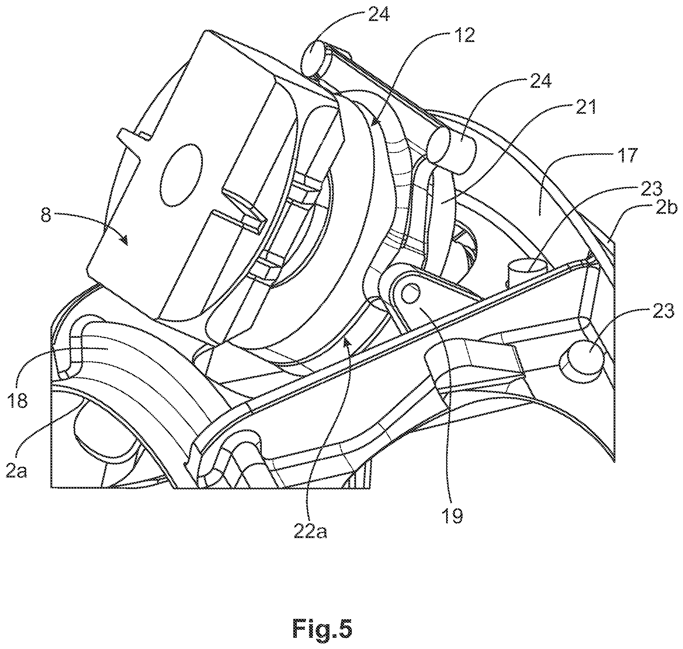

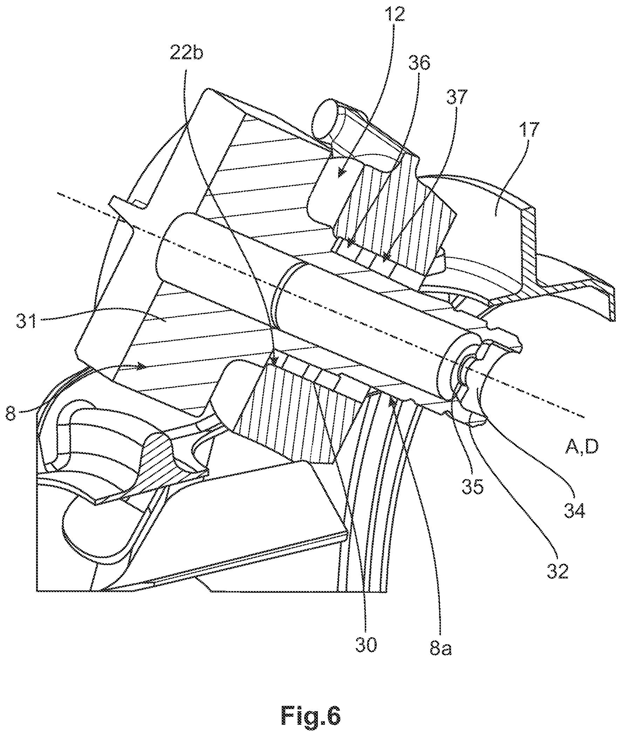

Sur le mode de réalisation des figures 5 et 6, le manchon de support 12 comprend deux tétons 25 (visibles sur la figure 3) qui s'étendent radialement par rapport à une paroi externe cylindrique 22a du manchon de support 12. Les tétons 25 sont d'axes coaxiaux. Chaque téton 25 est destiné à s'engager dans un alésage 20 correspondant suivant une liaison pivot pour permettre le pivotement du manchon de support 12 autour de l'axe de pivotement C. Les axes des tétons 25 sont définis dans un plan médian du manchon de support 12, ce plan médian étant perpendiculaire à l'axe de calage. Chaque manchon de support 12 peut pivoter ou basculer d'amont en aval suivant l'axe de pivotement C lorsque l'extraction de l'aube 3 de calage est nécessaire. Pour extraire l'aube à calage variable, le manchon de support 12 est pivoté vers l'amont.

De manière avantageuse, mais non limitativement, le manchon de support 12 est manœuvré manuellement par un opérateur.

Chaque orifice 14 est suffisamment grand pour laisser passer le plot 8 et une partie de la cinématique de calage qui pourra être activée par l'intérieur. Ces mêmes orifices 14 sont suffisamment grands pour permettre au manchon de support 12 ainsi que la pale 9 de pivoter vers l'amont. De manière avantageuse, le manchon de support 12 est agencé au moins en partie au-dessus de l'orifice 14 correspondant suivant l'axe de l'orifice (sensiblement coaxial avec l'axe radial) et quelle que soit la position du manchon de support 12. Suivant une autre alternative, une portion du corps du manchon 12 peut s'étendre à l'intérieur de l'orifice 14 correspondant dans la première position ou dans la deuxième position.

Suivant une caractéristique avantageuse, les dimensions de chaque orifice 14 sont supérieures au diamètre du manchon de support 12 (délimité par la paroi externe cylindrique 22a). Le périmètre de chaque orifice 14 est par exemple 5 fois supérieur au diamètre du manchon de support 12.

Ainsi que le montre la figure 5, des moyens de fixation sont configurés de manière à retenir le manchon de support 12 sur l'anneau 2 et d'éviter le pivotement de celui-ci en fonctionnement. La fixation est située en aval de l'anneau 2. Plus précisément, la fixation peut être réalisée par une liaison filetée ou une liaison baïonnette. Les moyens de fixation sont situés avantageusement à deux endroits en aval afin d'assurer une bonne position du manchon de support 12 et de l'aube à calage variable ainsi que la rétention sur l'anneau 2. Sur l'exemple représenté, les moyens de fixation comprennent deux ouvertures traversantes 23 qui sont ménagées dans la paroi 15 de l'anneau 2. Les ouvertures 23 traversent la paroi 15 suivant l'axe radial. Le manchon de support 12 comprend ici deux embases 24 qui s'étendent en saillie depuis la paroi externe cylindrique 22a du manchon de support 12. Ces embases et ouvertures sont destinées à être traversées par des vis, goujon ou tige filetée destinés à coopérer avec un écrou par exemple pour le serrage de l'ensemble.

Comme cela apparaît dans ce qui précède et en référence à la figure 6, chaque manchon de support 12 comprend un alésage 30 qui le traverse de part et d'autre suivant son axe de révolution D. L'alésage 30 forme un logement du plot 8 de l'aube 3. Le plot 8 de chaque aube 3 est monté pivotant dans l'alésage 30 suivant l'axe de calage A. Le plot 8 est monté dans le manchon de support 12 et ce dernier est monté sur l'anneau 2 de manière à résister à un détachement de l'aube 3 pendant la rotation de l'anneau 2 autour de l'axe longitudinal. Chaque plot 8 s'étend suivant l'axe de calage A. Le plot 8 présente avantageusement une forme cylindrique. De manière avantageuse, mais non limitativement, le plot 8 est de forme cylindrique droit. Nous entendons par l'expression « forme cylindrique droit » une forme qui est obtenue par le déplacement d'une droite génératrice suivant une courbe directrice définie dans un plan perpendiculaire à la droite génératrice. La courbe peut être circulaire.

Chaque plot 8 comprend une extrémité radialement extérieure 31 (par rapport à l'axe de calage A) qui est reliée à la pale 9. Suivant les modes de réalisation illustrés sur les figures 3, 5, et 6 l'extrémité radialement extérieure 31 est solidaire de la pale 9 qui n'est pas représentée sur ces figures. En d'autres termes, le plot 8 et la pale 9 sont formées d'une seule pièce (ou venues de matière).

Chaque plot 8 comprend une extrémité radialement intérieure 32 qui est opposée à l'extrémité radialement extérieure 31. Le plot 8 comprend un trou 34 qui débouche au niveau de cette extrémité radialement intérieure 32. Le trou 34 débouche de manière avantageuse à l'intérieur d'une cavité par l'intermédiaire d'une lumière 35. Le trou 34 est centré sur l'axe de calage A. Dans cet exemple, le trou 34 est destiné à recevoir une douille de transmission de calage (non représentée) destinée à transmettre le couple de torsion au plot 8 pour changer le calage de l'aube 3. La douille de transmission est reliée au système de changement de pas 40 et est fixée au plot 8 grâce à des moyens de fixation. Les moyens de fixation comprennent par exemple une vis centrée (passant par la lumière 35) sur l'axe longitudinal et un écrou serré sur la vis. D'autres moyens de fixation filetés par exemple sont bien entendu envisageables.

Afin de réaliser le calage des aubes 3 autour de leur axe de calage A, chaque plot 8 est monté pivotant grâce à au moins deux paliers à roulement 36, 37. Les paliers 36, 37 sont superposés suivant l'axe de calage A. Plus précisément chaque palier 36, 37 comprend une bague interne solidarisée à une paroi externe 8a du plot et une bague externe solidarisée à une paroi interne cylindrique 22b du manchon de support 12. La paroi interne cylindrique 22b est opposée radialement à la paroi cylindrique externe 22a. Les bagues interne et externe définissent des pistes de roulement pour des organes roulants. Ces derniers comprennent des billes ou des rouleaux. Les paliers 36, 37 peuvent permettre de reprendre les efforts centrifuges (soit selon l'axe de calage A) et/ou les efforts transversaux (soit selon un plan perpendiculaire à l'axe de calage A). De manière alternative, les organes roulants peuvent être également des billes. Des moyens de rétention sont prévus pour maintenir les paliers 36, 37 dans l'alésage 30 et sur le pied, et un système de verrouillage est prévu pour maintenir en position ces moyens de rétention.

Les paliers 36, 37 et le plot 8 forment un pivot pour chaque aube à calage variable.

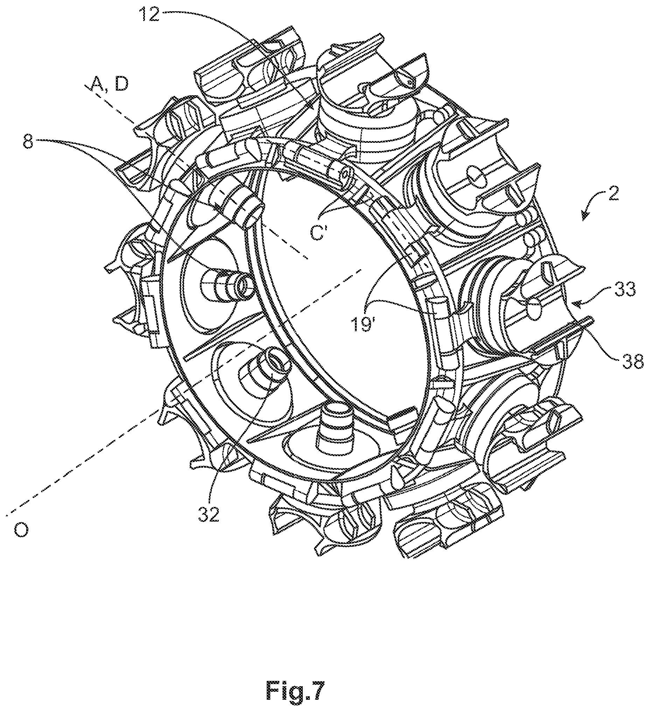

Les figures 7 à 9 illustrent un autre mode de réalisation de l'anneau 2 et du manchon de support 12 des aubes à calage variable. Dans cet exemple de réalisation, l'extrémité radialement extérieure 31 du plot 8 comprend une attache 33 destinée à recevoir un pied (non représenté) de pale 9. L'aube 3 (formée d'une seule pièce avec son pied) et le plot 8 sont formés de deux pièces distinctes. Suivant cet exemple, l'attache 33 comprend une rainure 38 qui s'étend suivant un axe perpendiculaire à l'axe du plot 8. La rainure 38 présente avantageusement, mais non limitativement, une section transversale en forme de bulbe. La rainure 38 débouche en amont et en aval de l'attache 33 de sorte que le pied de l'aube à calage variable puisse être inséré dans la rainure 38 depuis l'amont pour coulisser dans celle-ci.

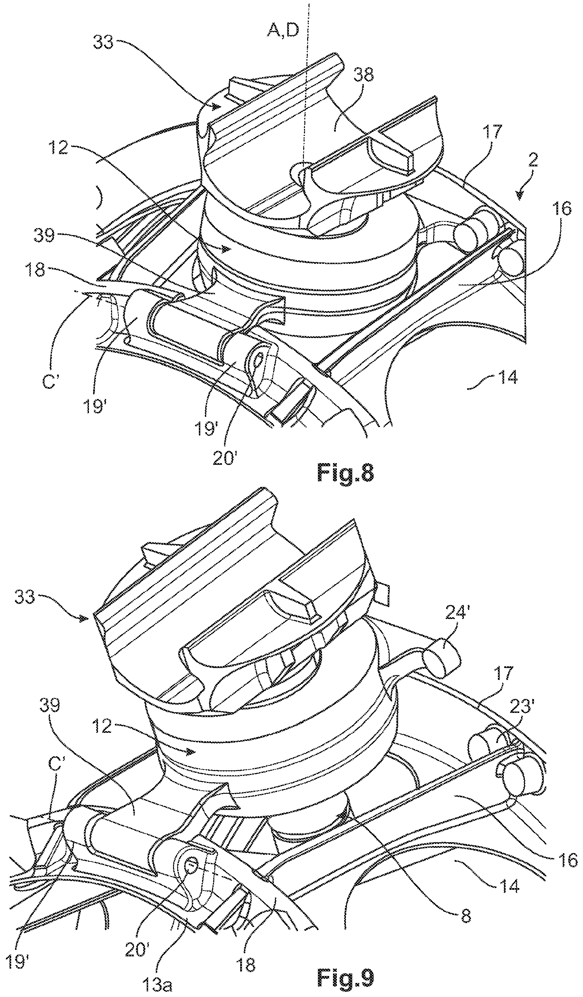

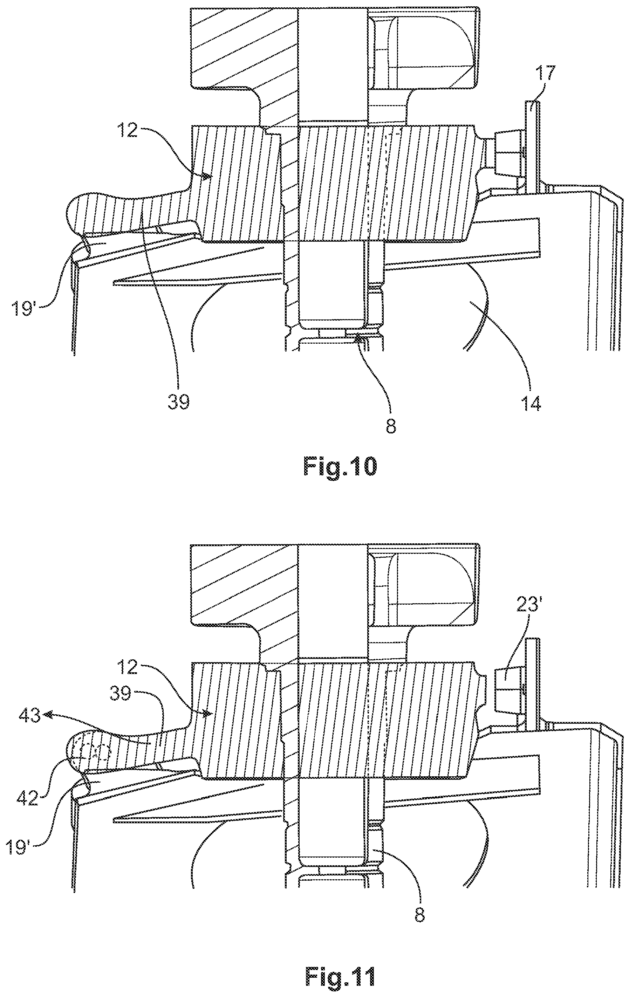

Ce mode de réalisation diffère également du mode de réalisation des figures 3 à 6 en ce que la position de l'axe de pivotement C' est différente. L'axe de pivotement C' ici est disposé en amont de l'anneau 2. Plus précisément l'axe de pivotement est défini par l'alésage 20' des deux oreilles 19' qui s'étendent en saillie sensiblement radialement depuis la paroi 15 de l'anneau et au voisinage de l'extrémité amont 13a. Ici les saillies sont disposées sur la structure de renforcement 18. Le manchon de support 12 comprend un pontet 39 qui s'étend radialement depuis la paroi externe cylindrique 22a du manchon de support 12. Le pontet 39 comprend à son extrémité libre un alésage 42 (représenté en pointillé sur la figure 11) qui s'étend transversalement de part et d'autre. En situation d'installation, l'axe de l'alésage 42 du pontet 39 est coaxial avec l'alésage 20' des oreilles 19'. Un arbre transversal (non représenté) est prévu pour traverser les alésages 20', 42 des oreilles et de l'extrémité libre. Une telle configuration est facilement démontable. De la sorte, le manchon de support 12 peut pivoter entre une première position dans laquelle l'axe de calage est coaxial à l'axe radial (cf. figure 8) et une deuxième position dans laquelle l'axe de calage est transversal à l'axe radial (cf. figure 9). Dans la première position, le manchon de support 12 est à l'intérieur au moins en partie de l'orifice 14 tandis que dans la deuxième position, le manchon de support 12 est à l'extérieur de l'orifice 14 et vers l'amont de l'anneau 2.

Suivant une variante de réalisation, l'extrémité libre du pontet 39 comprend des pions (non représentés) qui s'étendent transversalement et qui sont destinés chacun à s'engager dans un alésage 20' des oreilles 19' pour le pivotement du manchon de support correspondant.

Ce mode de réalisation diffère également par la disposition des moyens de fixation. Nous pouvons voir sur les figures 8 et 9 que l'axe des moyens de fixation s'étend suivant l'axe longitudinal. En particulier, les moyens de fixation comprennent deux ouvertures traversantes 23' qui traversent la bride radiale 17 de part et d'autre suivant l'axe longitudinal. Le manchon de support 12 comprend deux embases 24' qui s'étendent en saillie depuis la paroi externe cylindrique 22a du manchon de support 12. Ces embases et ouvertures sont destinées à être traversées par des vis, goujons ou tiges filetées destinés à coopérer avec un écrou par exemple pour le serrage de l'ensemble.

Il est possible de démonter de manière individuelle chaque aube en extrayant le pied de celle-ci du plot qui reste dans le manchon de support 12 si uniquement la pale doit être réparée et/ou contrôlée. Bien entendu, en cas d'une avarie au niveau du plot 8, celui-ci peut être extrait du manchon de support 12 en désengagent les arbres transversaux des oreilles. Préalablement, les moyens de fixation sont également démontés pour permettre le pivotement.

Suivante une variante de réalisation du mode de réalisation précédent et qui est illustré sur la figure 10. Dans cette variante, le plot 8 et la pale 9 sont formés d'une seule pièce (venus de matière). La pale 9 s'étend radialement depuis le plot 8. Le plot 8 est inséré dans le moyen de support 12 qui est relié à l'anneau 2 avec des moyens de fixation similaires (vis et écrous ou éléments filetés) des modes de réalisation décrits ci-dessus.

Nous allons maintenant décrire un exemple de procédé de montage d'un plot d'aube sur l'anneau 2.

Le procédé comprend une étape d'assemblage du plot 8 et du manchon de support 12. Pour cela, les bagues internes des deux paliers sont montées sur le plot 8 (par exemple par frettage). La bague externe du palier à roulement le plus externe par rapport à l'axe du plot 8 est montée en appui transversal à l'intérieur de l'alésage 30 du manchon de support 12. Celle-ci est par exemple frettée sur la paroi interne cylindrique 22b du manchon de support 12. Les organes roulants sont ensuite montés sur la bague externe.

Le procédé comprend une étape d'insertion du plot 8 dans le manchon de support 12. Au cours de cette insertion, le plot 8 est introduit suivant l'axe du manchon de support 12 à l'intérieur de l'alésage 30 correspondant.

Le procédé comprend ensuite une étape de montage des organes roulants de l'autre palier le plus interne puis de la bague externe de celui-ci. Les bagues externes respectives des deux paliers à roulement sont verrouillées par serrage des moyens de rétention. Les systèmes anti-rotation sont également montés pour empêcher le déplacement des moyens de rétention. Un autre moyen de rétention de la bague externe du deuxième palier et son système anti-rotation sont également montés.

Bien entendu, les bagues externes peuvent être montées préalablement dans l'alésage 30, puis les bagues internes sur le plot 8. De même, il est possible de monter dans un premier temps les organes roulants du palier le plus interne, puis ceux du palier le plus externe.

Le procédé comprend l'assemblage du manchon de support 12 sur l'anneau 2. Dans le cadre du mode de réalisation des figures 3 à 6, les tétons 25 sont disposés de manière à correspondre avec les alésages 20 des oreilles 19. Les tétons 25 sont insérés dans les alésages pour réaliser le pivotement. Dans le cadre du mode de réalisation des figures 7 à 10, l'alésage 42 de l'extrémité libre du pontet 39 est disposé de manière à correspondre avec l'alésage 20' des oreilles 19', puis l'arbre transversal est inséré à travers les alésages pour chaque manchon de support 12 de manière à permettre le pivotement de celui-ci. Dans l'autre variante de réalisation des figures 7 à 10, les tétons sont insérés dans les alésages des oreilles 19 19' afin de permettre le pivotement du manchon de support 12 par rapport à l'anneau 2.

Le procédé comprend ensuite une étape de fixation du manchon de support 12 sur l'anneau 2 de manière amovible. Avantageusement, les éléments filetés sont insérés dans les ouvertures et des éléments de serrage sont ensuite montés sur les éléments filetés pour la rétention du manchon de support 12 sur l'anneau 2, notamment pendant la mise en service de la turbomachine et de son fonctionnement. Lors de cette étape, le manchon de support 12 se trouve dans la première position et est à l'intérieur au moins en partie de l'orifice 14. Chaque plot 8 traverse un orifice 14 correspondant de l'anneau 2. De même, l'extrémité radialement intérieure du plot 8 est située à l'intérieur de l'anneau 2, vers l'axe de révolution de l'anneau 2 et l'axe longitudinal X de la turbomachine en situation d'installation. L'axe de révolution D du manchon de support 12 est parallèle à l'axe radial dans la première position.

Lorsque le plot 8 est équipé d'une attache 33, le pied de l'aube est inséré dans la rainure 38 avant la fixation du manchon de support 12 sur l'anneau 2.

Une fois que le manchon de support 12 est fixé, chaque aube est reliée au système de changement de pas 40. Pour cela, la douille de transmission de calage est insérée dans le trou 34 du plot 8 puis fixée dans le plot 8. La douille de transmission de calage est ensuite fixée au système de changement de pas 40 par des organes adéquats pour générer la rotation des aubes à calage variable autour de l'axe de calage A.

Le démontage de l'ensemble est obtenu en réalisant les étapes décrites ci-dessus en sens inverse. En particulier, le procédé de démontage comprend le retrait des moyens de fixation du manchon de support 12 sur l'anneau 2. Il suffit de dévisser dans cet exemple les vis et écrous des premiers organes de fixation 45. Le manchon de support 12 est basculé vers l'amont afin de pouvoir accéder facilement au plot 8. Après le basculement, le manchon de support 12 se trouve dans la deuxième position et est à l'extérieur de l'orifice 14, vers l'amont de l'anneau 2.

Le procédé de démontage comprend ensuite l'extraction du plot 8 du manchon de support 12 avec l'aube à calage variable.

Dans le cas du mode de réalisation de la figure 9, le procédé peut comprendre une étape d'extraction de la pale de l'attache 33 préalablement à l'étape de pivotement ou même de l'étape de retrait des moyens de fixation. Bien entendu, la pale et son pied peuvent être extraits de l'attache après l'étape de pivotement du manchon de support 12.

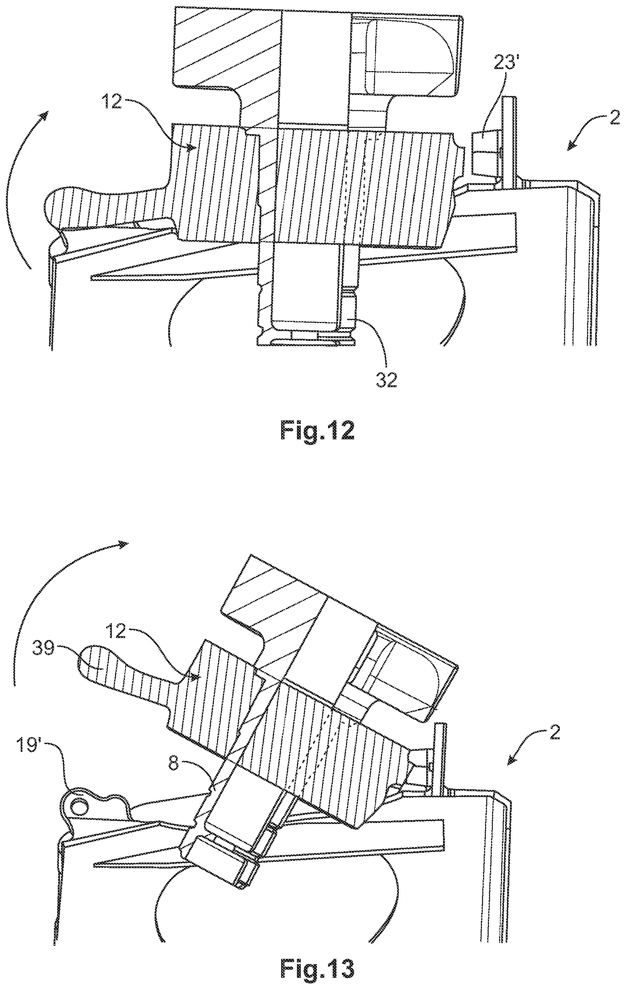

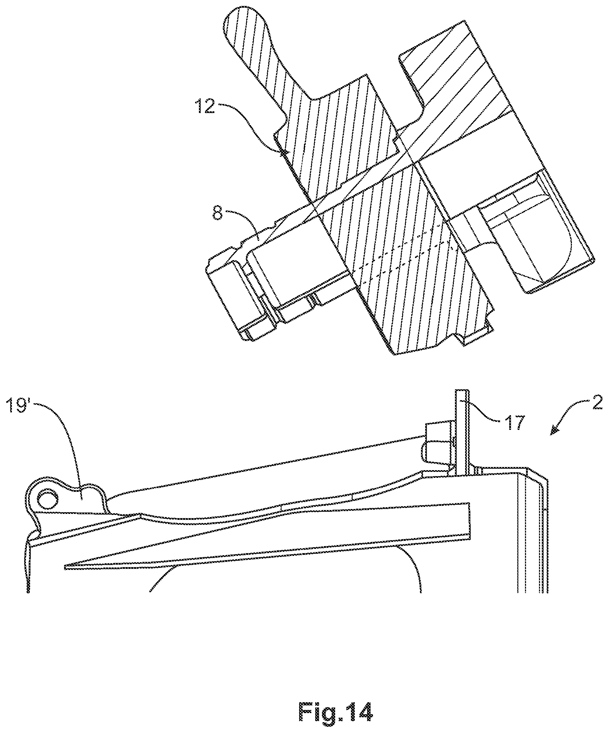

Dans le cas du mode de réalisation de la figure 10 (pale et plot d'une seule pièce), le procédé comprend une étape de désengagement du manchon de support 12 par rapport à l'anneau 2 au niveau de l'axe de pivotement C. Cette étape de désengagement est opérée en réalisant un mouvement de translation du manchon de support 12 vers l'amont suivant la flèche 43 comme illustré sur la figure 11. Pour cela, l'arbre transversal est préalablement extrait des alésages des oreilles 19 et de celui du pontet 39 ou du retrait des tétons des alésage des oreilles 19'. Cette étape de désengagement est suivie par un basculement (rotation sensiblement autour d'un axe transversal à l'axe des orifices 14) du manchon de support 12 vers l'amont comme cela est représenté sur les figures 12 et 13. Nous voyons sur la figure 14 que le manchon de support 12 et l'aube (plot 8 et pale) sont alors séparés de l'anneau 12 pour un contrôle ou une éventuelle réparation. De même, le plot peut être séparé du manchon de support.

## Revendications

1. Ensemble pour une turbomachine, en particulier d'aéronef, l'ensemble comportant un anneau (2) d'axe de révolution (O), dans lequel l'ensemble comprend une pluralité de manchons de support (12) présentant chacun un axe de révolution (D) et destinés chacun à recevoir un plot (8) d'une aube (3) à calage variable, chaque manchon de support (12) comprenant un alésage (30) traversant de part et d'autre le manchon de support (12) suivant l'axe de révolution (D), **caracterisé en ce que** chaque manchon de support (12) est monté pivotant sur l'anneau (2) suivant un axe de pivotement (C, C') transversal à l'axe radial (Z) et à l'axe de révolution (O).

2. Ensemble selon la revendication précédente, **caractérisé en ce que** chaque manchon de support (12) pivote entre une première position dans laquelle l'axe de révolution (D) du manchon de support (12) est parallèle à l'axe radial et perpendiculaire à l'axe de révolution (O), et une deuxième position dans laquelle l'axe de révolution (D) du manchon de support (12) est transversal à l'axe radial (Z).

3. Ensemble selon l'une des revendications précédentes, **caractérisé en ce que** l'anneau (2) est muni d'une pluralité d'orifices (14) traversant une paroi annulaire (15) de l'anneau (2) suivant un axe radial (Z) et disposés régulièrement autour de l'axe de révolution (O) et **en ce que** l'anneau (2) comprend deux oreilles (19) qui s'étendent en saillie de part et d'autre de chaque orifice (14), chaque manchon de support (12) étant installé entre les deux oreilles (19) et pivotant sur les oreilles (19) suivant l'axe de pivotement (C).

4. Ensemble selon l'une des revendications 1 à 2, **caractérisé en ce que** l'anneau (2) s'étend entre une extrémité amont (13a) et une extrémité aval (13b) suivant l'axe de révolution (O) de l'anneau (2), l'anneau (2) comprenant deux oreilles (19') qui s'étendent en saillie au voisinage de l'extrémité amont (13), chaque manchon de support (12) pivotant sur les oreilles (19') suivant l'axe de pivotement (C').

5. Ensemble selon l'une quelconque des revendications précédentes, **caractérisé en ce que** l'anneau (2) comprend des moyens de renfort mécanique, les moyens de renfort mécanique comportant des nervures (16) qui s'étendent d'une part, entre une extrémité amont (13a) et une extrémité aval (13b) de l'anneau suivant un axe de révolution (O), et d'autre part suivant l'axe radial (Z), les nervures (16) étant disposées de part et d'autre des orifices (14) autour de l'axe de révolution O.

6. Ensemble selon l'une quelconque des revendications précédentes, **caractérisé en ce qu'**il comprend une pluralité d'aubes (3) à calage variable munie chacune d'un plot (8) de forme cylindrique, chaque plot (8) étant monté pivotant dans l'alésage (30) d'un manchon de support (12) autour d'un axe de calage (A).

7. Ensemble selon la revendication précédente, **caractérisé en ce que** chaque aube (3) à calage variable comprend une pale (9) qui s'étend depuis le plot (8), la pale (9) et le plot (8) étant formés d'une seule pièce.

8. Ensemble selon la revendication 6, **caractérisé en ce que** chaque plot (8) comprend une attache (33) à une extrémité radialement extérieure (31), l'attache (33) étant destinée à recevoir un pied d'aube (3) et comportant une rainure (38) qui s'étend suivant un axe perpendiculaire à l'axe du plot (8).

9. Ensemble selon l'une quelconque des revendications 2 à 8, **caractérisé en ce qu'**il comprend des moyens de fixation (23 ; 23') configurés de manière à retenir le manchon de support (12) sur l'anneau 2 lorsque celui-ci est dans la première position.

10. Ensemble selon la revendication 2 et l'une quelconque des revendications 3 à 9, **caractérisé en ce que** chaque manchon de support (12) est en regard d'un orifice (14) dans la première position et traverse au moins en partie un orifice (14) dans la deuxième position.

11. Ensemble selon la revendication 2 et l'une quelconque des revendications 3 à 9, **caractérisé en ce que** chaque manchon de support (12) est à l'extérieur et à distance d'un orifice dans la deuxième position.

12. Ensemble selon l'une quelconque des revendications précédentes, **caractérisé en ce que** l'ensemble comprend au moins deux paliers à roulement (36, 37) comprenant chacun une bague interne montée sur une paroi externe du plot (8) et une bague externe destinée à être en appui contre une paroi interne cylindrique (22b) de l'alésage du manchon de support (12), les bagues interne et externe définissant des pistes de roulement pour des organes roulants.

13. Turbomachine (1) comprenant un ensemble selon l'une quelconque des revendications précédentes, un système de changement de pas (40) relié à une extrémité radialement intérieure (32) d'un plot (8) de chaque aube (3) à calage variable et un arbre de rotor relié à l'anneau (2).

14. Procédé de démontage d'un ensemble selon l'une quelconque des revendications 1 à 12, le procédé étant **caractérisé en ce qu'**il comprend les étapes suivantes :
- retrait des moyens de fixation du manchon de support (12) sur l'anneau (2),
- pivotement du manchon de support (12) suivant l'axe de pivotement (C, C') et vers l'amont suivant l'axe de révolution (O), et
- extraction du plot (8) du manchon de support (12).

15. Procédé de démontage d'un ensemble selon la revendication précédente, **caractérisé en ce que** préalablement à l'étape d'extraction du plot, le procédé comprend une étape de désengagement du manchon de support (12) par rapport à l'anneau (2) au niveau de l'axe de pivotement (C).

## Patentansprüche

1. Anordnung für ein Turbotriebwerk, insbesondere eines Luftfahrzeugs, wobei die Anordnung einen Ring (2) mit einer Rotationsachse (O) umfasst, wobei die Anordnung eine Vielzahl von Stützhülsen (12) umfasst, die jeweils eine Rotationsachse (D) aufweisen, und jeweils dazu bestimmt sind, einen Stift (8) einer Schaufel (3) mit variabler Feststellposition aufzunehmen, wobei jede Stützhülse (12) eine Bohrung (30) umfasst, welche die Stützhülse (12) beiderseits entlang der Rotationsachse (D) durchquert, **dadurch gekennzeichnet, dass** jede Stützhülse (12) schwenkbar auf dem Ring (2) entlang einer Schwenkachse (C, C') quer zur radialen Achse (Z) und zur Rotationsachse (O) montiert ist.

2. Anordnung nach dem vorstehenden Anspruch, **dadurch gekennzeichnet, dass** jede Stützhülse (12) zwischen einer ersten Position, in der die Rotationsachse (D) der Stützhülse (12) parallel zur radialen Achse und senkrecht zur Rotationsachse (O) verläuft, und einer zweiten Position schwenkt, in der die Rotationsachse (D) der Stützhülse (12) quer zur radialen Achse (Z) verläuft.

3. Anordnung nach einem der vorstehenden Ansprüche, **dadurch gekennzeichnet, dass** der Ring (2) mit einer Vielzahl von Öffnungen (14) versehen ist, die eine ringförmige Wand (15) des Ringes (2) entlang einer radialen Achse (Z) durchqueren, und regelmäßig um die Rotationsachse (O) angeordnet sind, und dadurch, dass der Ring (2) zwei Ohren (19) umfasst, die sich hervorstehend beiderseits jeder Öffnung (14) erstrecken, wobei jede Stützhülse (12) zwischen den beiden Ohren (19) und entlang der Schwenkachse (C) schwenkend auf den Ohren (19) installiert ist.

4. Anordnung nach einem der Ansprüche 1 bis 2, **dadurch gekennzeichnet, dass** sich der Ring (2) zwischen einem stromaufwärts liegenden Ende (13a) und einem stromabwärts liegenden Ende (13b) entlang der Rotationsachse (O) des Ringes (2) erstreckt, wobei der Ring (2) zwei Ohren (19') umfasst, die sich hervorstehend in der Nachbarschaft des stromaufwärts liegenden Endes (13) erstrecken, wobei jede Stützhülse (12) entlang der Schwenkachse (C') auf den Ohren (19') schwenkt.

5. Anordnung nach einem der vorstehenden Ansprüche, **dadurch gekennzeichnet, dass** der Ring (2) mechanische Verstärkungsmittel umfasst, wobei die mechanischen Verstärkungsmittel Rippen (16) umfassen, die sich einerseits zwischen einem stromaufwärts liegenden Ende (13a) und einem stromabwärts liegenden Ende (13b) des Rings entlang einer Rotationsachse (O), und andererseits entlang der radialen Achsel (Z) erstrecken, wobei die Rippen (16) beiderseits der Öffnungen (14) um die Rotationsachse O herum angeordnet sind.

6. Anordnung nach einem der vorstehenden Ansprüche, **dadurch gekennzeichnet, dass** die eine Vielzahl von Schaufeln (3) mit variabler Feststellposition umfasst, die jeweils mit einem Stift (8) in zylindrischer Form versehen ist, wobei jeder Stift (8) schwenkbar in der Bohrung (30) einer Stützhülse (12) um eine Feststellachse (A) herum montiert ist.

7. Anordnung nach dem vorstehenden Anspruch, **dadurch gekennzeichnet, dass** jede Schaufel (3) mit variabler Feststellposition ein Blatt (9) umfasst, das sich von dem Stift (8) erstreckt, wobei das Blatt (9) und der Stift (8) in einem Stück gebildet sind.

8. Anordnung nach Anspruch 6, **dadurch gekennzeichnet, dass** jeder Stift (8) eine Befestigung (33) an einem radial äußeren Ende (31) umfasst, wobei die Befestigung (33) dazu bestimmt ist, einen Schaufelfuß (3) aufzunehmen, und eine Nut (38) umfasst, die sich entlang einer Achse senkrecht zur Stiftachse (8) erstreckt.

9. Anordnung nach einem der Ansprüche 2 bis 8, **dadurch gekennzeichnet, dass** sie Befestigungsmittel (23 ; 23') umfasst, die konfiguriert sind, um die Stützhülse (12) auf dem Ring 2 zurückzuhalten, wenn sich dieser in der ersten Position befindet.

10. Anordnung nach Anspruch 2 und einem der Ansprüche 3 bis 9, **dadurch gekennzeichnet, dass** jede Stützhülse (12) gegenüber einer Öffnung (14) in der ersten Position liegt und eine Öffnung (14) in der zweiten Position mindestens teilweise durchquert.

11. Anordnung nach Anspruch 2 und einem der Ansprüche 3 bis 9, **dadurch gekennzeichnet, dass** jede Stützhülse (12) außerhalb und im Abstand zu einer Öffnung in der zweiten Position liegt.

12. Anordnung nach einem der vorstehenden Ansprüche, **dadurch gekennzeichnet, dass** die Anordnung mindestens zwei Wälzlager (36, 37) umfasst, die jeweils einen inneren Ring, der auf einer Außenwand des Stiftes (8) montiert ist, und einen inneren Ring umfasst, der dazu bestimmt ist, an einer zylindrischen Innenwand (22b) der Bohrung der Stützhülse (12) anzuliegen, wobei der innere und äußere Ring Rollbahnen für die rollenden Organe definieren.

13. Turbotriebwerk (1), das eine Anordnung nach einem der vorstehenden Ansprüche, ein System zur Änderung von Anstellwinkeln (40), das mit einem radial inneren Ende (32) eines Stiftes (8) einer jeden Schaufel (3) mit variable Feststellposition verbunden ist, und eine Rotorwelle umfasst, die mit dem Ring (2) verbunden ist.

14. Verfahren zur Demontage einer Anordnung nach einem der Ansprüche 1 bis 12, wobei das Verfahren **dadurch gekennzeichnet ist, dass** es die folgenden Schritte umfasst:
- Abnehmen, der Befestigungsmittel von der Stützhülse (12) auf dem Ring (2),
- Schwenken der Stützhülse (12) entlang der Schwenkachse (C, C') und nach stromaufwärts entlang der Rotationsachse (O), und
- Extrahieren des Stifts (8) aus der Stützhülse (12).

15. Verfahren zur Demontage einer Anordnung nach dem vorstehenden Anspruch, **dadurch gekennzeichnet, dass** das Verfahren vor dem Schritt zum Extrahieren des Stifts, einen Schritt zum Lösen der Stützhülse (12) in Bezug zum Ring (2) im Bereich der Schwenkachse (C) umfasst.

## Claims

1. An assembly for a turbine engine, in particular of an aircraft, the assembly comprising a ring (2) with an axis of revolution (O), the assembly comprising a plurality of support sleeves (12) each having an axis of revolution (D) and each configured to receive a stud (8) of a variable pitch vane (3), each support sleeve (12) comprising a bore (30) passing through both sides of the support sleeve (12) along the axis of revolution (D), **characterized in that** each support sleeve (12) is mounted so as to pivot on the ring (2) about a pivot axis (C, C') transverse to the radial axis (Z) and to the axis of revolution (O).

2. The assembly according to the preceding claim, **characterized in that** each support sleeve (12) pivots between a first position wherein the axis of revolution (D) of the support sleeve (12) is parallel to the radial axis and perpendicular to the axis of revolution (O), and a second position wherein the axis of revolution (D) of the support sleeve (12) is transverse to the radial axis (Z).

3. The assembly according to one of the preceding claims, **characterized in that** the ring (2) is equipped with a plurality of orifices (14) passing through an annular wall (15) of the ring (2) along a radial axis (Z) and arranged regularly around the axis of revolution (O) and **in that** the ring (2) comprises two ears (19) which project on either side of each orifice (14), each support sleeve (12) being installed between the two ears (19) and pivoting on the ears (19) along the pivot axis (C).

4. The assembly according to one of claims 1 to 2, **characterized in that** the ring (2) extends between an upstream end (13a) and a downstream end (13b) along the axis of revolution (O) of the ring (2), the ring (2) comprising two ears (19') which project in the vicinity of the upstream end (13), each support sleeve (12) pivoting on the ears (19') along the pivot axis (C').

5. The assembly according to any one of the preceding claims, **characterized in that** the ring (2) comprises mechanical reinforcement means, the mechanical reinforcement means comprising ribs (16) which extend, on the one hand, between an upstream end (13a) and a downstream end (13b) of the ring along an axis of revolution (O) and, on the other hand, along the radial axis (Z), the ribs (16) being disposed on either side of the orifices (14) around the axis of revolution O.

6. The assembly according to any one of the preceding claims, **characterized in that** it comprises a plurality of variable pitch vanes (3) each equipped with a cylindrical stud (8), each stud (8) being mounted so as to pivot in the bore (30) of a support sleeve (12) about a pitch axis (A).

7. The assembly according to the preceding claim, **characterized in that** each variable pitch vane (3) comprises a blade (9) which extends from the stud (8), the blade (9) and the stud (8) being formed in one-part.

8. The assembly according to claim 6, **characterized in that** each stud (8) comprises an attachment (33) at a radially outer end (31), the attachment (33) being configured to receive a vane root (3) and comprising a groove (38) which extends along an axis perpendicular to the axis of the stud (8).

9. The assembly according to any one of claims 2 to 8, **characterized in that** it comprises attachment means (23; 23') configured so as to retain the support sleeve (12) on the ring 2 when the latter is in the first position.

10. The assembly according to claim 2 and any one of claims 3 to 9, **characterized in that** each support sleeve (12) faces an orifice (14) in the first position and at least partially passes through an orifice (14) in the second position.

11. The assembly according to claim 2 and any one of claims 3 to 9, **characterized in that** each support sleeve (12) is outside and spaced from an orifice in the second position.

12. The assembly according to any one of the preceding claims, **characterized in that** the assembly comprises at least two rolling bearings (36, 37) each comprising an inner ring mounted on an outer wall of the stud (8) and an outer ring configured to bear against a cylindrical inner wall (22b) of the bore of the support sleeve (12), the inner and outer rings defining raceways for rolling members.

13. A turbine engine (1) comprising an assembly according to any one of the preceding claims, a pitch change system (40) connected to a radially inner end (32) of a stud (8) of each variable pitch vane (3) and a rotor shaft connected to the ring (2).

14. A method for dismantling an assembly according to any one of claims 1 to 12, the method being **characterized in that** it comprises the following steps:
- removing the attachment means for attaching the support sleeve (12) to the ring (2),
- pivoting the support sleeve (12) along the pivot axis (C, C') and upstream along the axis of revolution (O), and
- extracting the stud (8) from the support sleeve (12).

15. The method for dismantling an assembly according to the preceding claim, **characterized in that** prior to the step of extracting the stud, the method comprises a step of disengaging the support sleeve (12) relative to the ring (2) at the level of the pivot axis (C).
